# EUROPÄISCHE PATENTSCHRIFT

(11) **EP 2 339 593 B1**
(45) Veröffentlichungstag und Bekanntmachung des Hinweises auf die Patenterteilung: **08.02.2012**
(21) Anmeldenummer: 09306240.4
(22) Anmeldetag: 16.12.2009
(51) Int. Cl.: H01B 12/14, F16L 59/065

(54) **Supraleitfähiges Kabelsystem**
Superconductive cable system
Système de câble supraconducteur

(43) Veröffentlichungstag der Anmeldung: 29.06.2011
(73) Patentinhaber: Nexans, 75008 Paris (FR)
(72) Erfinder: Dr. Soika, Rainer, 30559, Hannover (DE); Dipl.-Ing. Schippl, Klaus, 30659, Hannover (DE)
(74) Vertreter: Döring, Roger

(56) Entgegenhaltungen:
- EP-A1- 0 326 923
- EP-A1- 0 550 053
- EP-A1- 1 826 779
- WO-A2-2007/094593
- US-A1- 2007 220 904

## Beschreibung

Die Erfindung bezieht sich auf ein supraleitföhiges Kabelsystem gemäß dem Oberbegriff des Patentanspruchs 1.

Ein solches Kabelsystem ist in der EP 0 326 923 B1 beschrieben.

In einem derartigen Kabelsystem dient der Kryostat als Umhüllung des mindestens einen suproleiffähigen elektrischen Kabels und der Anschtußbereiche desselben in Endenabschlüssen. Er soll sicherstellen, daß die Temperatur des in demselben geführten tiefgekühlten Mediums langfristig und auch über längere Strecken ohne wesentliche Erwärmung erhalten bleibt. Ein derartiges Medium ist beispielsweise Stickstoff, der beispielsweise mit einer zwischen 67 K und 90 K liegenden Temperatur in den Kryostat eingebracht wird.

Der Kryostat besteht gemäß der eingangs erwähnten EP 0 326 923 B1 aus zwei einen Spalt zwischen sich einschließenden Rohren aus Edelstahl, die auch quer zu ihrer Längsrichtung gewellt sein können. In dem Spalt zwischen den beiden Rohren sind Abstandshalter aus einem Material geringer Wärmeleitfähigkeit und mit einem Metall kaschierte Kunststoff-Folien hoher Reflektivität angeordnet, durch welche die Wärmestrahlung reduziert wird. Außerdem ist der Spalt evakuiert. Solange das Vakuum besteht, kann ein solcher Kryostat seine Funktion erfüllen. Wenn dasselbe aber zusammenbricht, beispielsweise durch eine Beschädigung des äußeren Rohres des Kryostats, findet ein so hoher Wärmeeinfall in den Kryostat statt, daß die Betriebssicherheit des Kabelsystems nicht mehr gewährleistet ist. Das supraleitfähige Kabel muß dann sofort vom Netz genommen werden, damit es im Kabelsystem nicht zu einem elektrischen Durchschlag kommt, weil sich im Kühlmedium, insbesondere in Stickstoff, aufgrund des Wärmeeinfalls Gasblasen bilden. Ein solcher Durchschlag würde zu einer Zerstörung von Teilen des Kabelsystems führen. Das würde insbesondere in einem Endenabschluß zu einem erheblichen Schaden führen. Das supraleitfähige Kabel kann erst nach einer Reparatur des Kryostats wieder in Betrieb genommen werden. Der Aufwand ist entsprechend hoch.

Der Erfindung liegt die Aufgabe zugrunde, das eingangs geschilderte Kabelsystem so zu gestalten, daß es seine Funktion auch bei einer Beschädigung des Kryostats beibehält.

Diese Aufgabe wird entsprechend dem kennzeichnenden Merkmal des Patentanspruchs 1 gelöst.

Durch das zusätzliche wärmedämmende isoliermaterial ist sichergestellt, daß im Falle eines Zusammenbruchs des Vakuums im Kryostat der wärmeeinfall in das Kabesystem so gering ist, daß dasselbe zunächst sicher weiter betrieben werden kann. Die Gefahr einer Zerstörung des Kabelsystems durch einen elektrischen Durchschlag ist dadurch ausgeschlossen, weil sich insbesondere keine Gasblasen im Kühlmedium bilden, Es bleibt genügend Zeit, um die Energieübertragung auf eine andere Strecke umzuschalten, bevor das supraleitfähige Kabel vom Netz genommen wird.

Geeignete wärmedämmende Isoliermaterialien sind beispielsweise Polyurethan und insbesondere Vakuumisolationspaneele, die ein hochporöses, wärmedämmendes Material enthalten, das hermetisch dicht von einer Folie umgeben ist, deren umschlossener Raum evakuiert ist. Ein solches Material ist beispielsweise Kieselsäure.

Ein Ausführungsbeispiel des Erfindungsgegenstandes ist in den Zeichnungen dargestellt.

Es zeigen:
Fig. 1 in schematischer Darstellung ein supraleitfähiges Kabelsystem nach der Erfindung.
Fig. 2 einen Querschnitt durch einen in dem Kabelsystem verwendeten Kryostat in vergrößerter Darstellung.

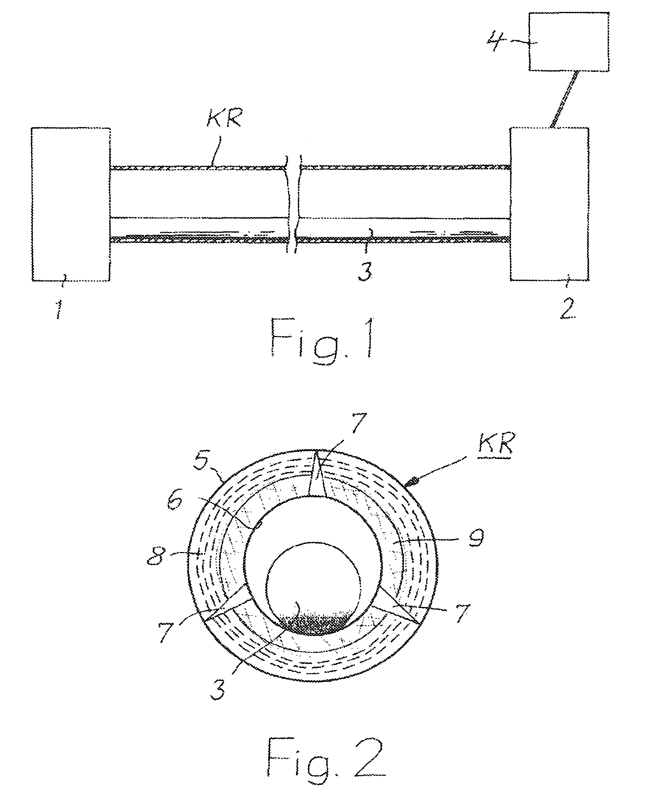

Das in Fig. 1 schematisch dargestellte Kabelsystem hat zwei Endenabschlüsse 1 und 2, zwischen denen ein supraleitfähiges Kabel 3 angeordnet ist. Das Kabel 3 kann in den Endenabschlüssen 1 und 2 mit einem weiterführenden supraleitfähigen Kabel oder mit einem normalleitenden Kabel oder über eine entsprechend gestaltete Durchführung mit einer elektrischen Einrichtung verbunden sein. Der Aufbau des supraleitfähigen Kabels 3 und sein elektrischer Anschluß ein weiterführende Teile sind hier nicht von Bedeutung. Es wird daher nicht genauer darauf eingegangen.

Das supraleitfähige Kabel 3 und die beiden Endenabschlüsse 1 und 2 sind von einem Kryostat KR umgeben, dessen Aufbau beispielsweise aus Fig. 2 hervorgeht. In den Kryostat KR wird beispielsweise ein in einem Vorratsraum 4 vorhandenes Kühlmedium eingespeist, wie beispielsweise Stickstoff, durch welches der supraleitfähige Leiter des Kabels 3 in den supraleitfähigen Zustand gebracht und in diesem Zustand gehalten wird. Das wird durch den Kryostat KR gewährleistet, in dem auf der Strecke zwischen den beiden Endenabschlüssen 1 und 2 das Kabel 3 untergebracht ist. In dem Kryostat KR könnten auch zwei oder mehr supraleitfähige Kabel angeordnet sein.

Der Kryostat KR besteht aus zwei mit Abstand konzentrisch zueinander angeordneten metallischen Rohren 5 und 6, zwischen denen ein umlaufender Spalt vorhanden ist. Die beiden Rohre 5 und 6 bestehen mit Vorteil aus Edelstahl. Sie können auch quer zu ihrer Längsrichtung gewellt sein. In dem Spalt zwischen den beiden Rohren 5 und 6 ist eine aus einem schlecht wärmeleitenden Material bestehende Abstandshalterung 7 angebracht, durch welche die beiden Rohre 5 und 6 auf ihrer ganzen Länge konzentrisch zueinander gehalten sind. Die Abstandshalterung 7 ist mit Vorteil als Strang ausgeführt, der mit wendelförmigem Verlauf zwischen den beiden Rohren 5 und 6 angeordnet ist. Sie kann auch einen anderen Aufbau haben, solange sichergestellt ist, daß in dem Spalt zwischen den beiden Rohren 5 und 6 wärmeisolierendes Material lückenlos angebracht werden kann.

In dem Spalt zwischen den beiden Rohren 5 und 6 ist bei einem voll funktionsfähigen Kryostat KR eine sogenannte Superisolierung 8 angebracht, die beispielsweise aus mit Metall, beispielsweise Aluminium, beschichteten Kunststoff-Folien mit jeweils dazwischen liegendem Vliesmaterial besteht. Die Superisolierung 8 ist in Fig. 2 durch kreisförmig verlaufende, gestrichelte Linien angedeutet. Der Spalt zwischen den beiden Rohren 5 und 6 ist außerdem evakuiert.

Zusätzlich zu der Superisolierung 8 ist in dem Spalt zwischen den beiden Rohren 5 und 6 wärmedämmendes Isoliermaterial 9 angebracht, das in Fig. 2 durch eingezeichnete Kreuze gekennzeichnet ist. Das Isoliermaterial 9 ist im Spalt zwischen den beiden Rohren 5 und 6 lückenlos vorhanden und füllt denselben zusammen mit den Folien der Superisolierung 8 weitgehend aus. Es kann oberhalb der Superisolierung 8 oder zwischen den Lagen derselben angeordnet sein. Mit Vorteil liegt das Isoliermaterial 9 unterhalb der Superisolierung 8, so wie es in Fig. 2 gezeigt ist.

Als wärmedämmendes Isoliermaterial 9 können beispielsweise Polyurethan oder andere bekannte, wärmedämmende Materialien eingesetzt werden. In bevorzugter Ausführungsform wird aber ein hochporöses Material, wie beispielsweise Kieselsäure, eingesetzt, das in einem Vakuumisolationspaneel hermetisch dicht von einer Folie umgeben ist, deren umschlossener Raum evakuiert ist. Dieses Vakuum ist von dem im Spalt zwischen den beiden Rohren 5 und 6 bestehenden Vakuum unabhängig. Es bleibt also erhalten, auch wenn das im Spalt vorhandene Vakuum zusammenbricht. Das wärmedämmende Isoliermaterial 9 behält seine Eigenschaft auch bei zusammengebrochenem Vakuum bei, so daß der vom Kryostat KR umschlossene Raum vor einem schlagartigen Wärmeeinfall geschützt ist.

## Patentansprüche

1. Supraleitfähiges Kabelsystem, bei dem mindestens ein supraleitfähiges elektrisches Kabel (3) in einem Kryostat (KR) angeordnet ist, der aus zwei konzentrisch und mit Abstand zueinander angeordneten metallischen Rohren (5,6) besteht, bei welchem in dem durch den Abstand der Rohre (5,6) voneinander gebildeten, umlaufenden Spalt eine Vakuumisolierung angebracht ist, die aus Abstandshaltern (7) aus einem Material geringer Wärmeleitfähigkeit und mit einem Metall kaschierten kunststoff-Folien hoher Reflektivität besteht und bei welchem der Spalt evakuiert ist, **dadurch gekennzeichnet, daß** in dem Spalt zwischen den beiden Rohren (5,6) zusätzlich wärmedämmendes Isoliermaterial (9) angeordnet ist, dessen wärmedämmende Eigenschaften unabhängig von dem zwischen den beiden Rohren (5,6) erzeugten Vakuum sind.

2. Kabelsystem nach Anspruch 1, **dadurch gekennzeichnet, daß** als wärmedämmendes Isoliermaterial (9) Vakuumisolationspaneele eingesetzt sind.

3. Kabelsystem nach Anspruch 1, **dadurch gekennzeichnet, daß** als wärmedämmendes Isoliermaterial (9) Polyurethan eingesetzt ist.

## Claims

1. Superconductive cable system, in which at least one superconductive electrical cable (3) is arranged in a cryostat (KR) which consists of two metallic tubes (5,6) which are arranged concentrically and at a distance from one another and in whic h vacuum insula tio n is arranged in the circumferential gap formed b y the distance between the tubes (5,6), which vacuum insula tio n c o nsists of spacers (7) composed of a material having low thermal conductivity and of plastic films coated with a metal and having high reflectivity, and in which the gap is evacuated, **characterized in that** thermally insulating material (9) is additionally arranged in the gap between the two tubes (5,6) the thermal insulating characteristics of which are independent of the vacuum which is produced between the two tubes (5,6).

2. Cable system according to claim 1, **characterized in that** vacuum insulation panels are used as the thermally insula ting material (9).

3. Cable system according to claim 1, **characterized in that** polyurethane is used as the thermally insula ting material (9).

## Revendications

1. système de câble supraconducteur, dans lequel au moins un câble (3) électrique supraconducteur est disposé dans un cryostat (KR), qui est constitué de deux tuyaux métalliques (5, 6) disposés de façon concentrique et à distance l'un de l'autre, dans lequel une isolation par vide est placée dans la fente périphérique, formée par l'espacement des tuyaux (5, 6), laquelle isolation est constituée d'écarteurs (7) à base d'un matériau de faible conductibilité thermique et de films plastiques doublés avec un métal de réflectivité élevée, et dans lequel la fente est mise sous vide, **caractérisé en ce que**, en supplément, un matériau isolant (9) calorifuge est disposé dans la fente entre les deux tuyaux (5, 6), matériau dont les propriétés calorifuges sont indépendantesduvide généré entre les deux tuyaux (5, 6).

2. système de câble selon la revendication 1, **caractérisé en ce que** des panneaux d'isolation sous vide sont utilisés comme matériau isolant (9) calorifuge.

3. système de câble selon la revendication 1, **caractérisé en ce que** du polyuréthane est utilisé comme matériau isolant (9) calorifuge.
